# EUROPÄISCHE PATENTSCHRIFT

(11) **EP 3 380 350 B1**
(45) Veröffentlichungstag und Bekanntmachung des Hinweises auf die Patenterteilung: **05.06.2019**
(21) Anmeldenummer: 16798088.7
(22) Anmeldetag: 10.11.2016
(51) Int. Cl.: B60J 7/22

(54) **WINDLEITEINRICHTUNG FÜR EINEN KRAFTWAGEN, INSBESONDERE EINEN PERSONENKRAFTWAGEN**
AIR DEFLECTION DEVICE FOR A MOTOR VEHICLE, IN PARTICULAR A PASSENGER CAR
DISPOSITIF DÉFLECTEUR D'AIR POUR VÉHICULE À MOTEUR, NOTAMMENT VOITURE DE TOURISME

(30) Priorität: 24.11.2015 DE 102015015206
(43) Veröffentlichungstag der Anmeldung: 03.10.2018
(73) Patentinhaber: Daimler AG, 70327 Stuttgart (DE)
(72) Erfinder: MELCHGER, Nicolai, 72218 Wildberg (DE); MOESSNER, Alexander, 71277 Rutesheim (DE); WENZLER, Joachim, 75397 Simmozheim (DE)
(74) Vertreter: JENSEN & SON
(86) Internationale Anmeldenummer: PCT/EP2016/001868
(87) Internationale Veröffentlichungsnummer: WO 2017/088954

(56) Entgegenhaltungen:
- DE-A1-102004 027 087
- DE-A1-102007 002 799
- US-A- 1 717 515
- US-A- 4 950 017

## Beschreibung

Die Erfindung betrifft eine Windleiteinrichtung für einen Kraftwagen, insbesondere einen Personenkraftwagen, gemäß Oberbegriff des Anspruchs1.

Eine solche Windleiteinrichtung für einen Kraftwagen, insbesondere einen Personenkraftwagen, ist beispielsweise bereits der DE 10 2004 027 087 D4 als bekannt zu entnehmen. Die Windleiteinrichtung umfasst wenigstens ein in wenigstens einer Stellung bei einer Vorwärtsfahrt des Kraftwagens von Luft umströmtes, eigensteifes Profil, welches beispielsweise als Lamelle ausgebildet ist, deren Längserstreckungsrichtung zumindest im Wesentlichen in Fahrzeugquerrichtung und somit quer zur Strömungsrichtung der Luft verläuft. Das Profil ist beispielsweise zwischen der wenigstens einen Stellung in wenigstens einer eingefahrenen Stellung in Fahrzeughochrichtung verstellbar und dabei beispielsweise in der wenigstens einen Stellung gegenüber der eingefahrenen Stellung in Fahrzeugrichtung weiter oben angeordnet.

Dabei weist das Profil zumindest eine Vorderkante auf, über welche die Luft das Profil anströmt. Dies bedeutet, dass die Vorderkante eine in Fahrzeuglängsrichtung nach vorne weisende Kante oder Seite ist, die in der wenigstens einen Stellung und bei einer Vorwärtsfahrt des Kraftwagens im Wind steht und demzufolge von Luft angeströmt beziehungsweise umströmt wird. Das Profil ist somit in der wenigstens einen Stellung ein so genanntes umströmtes Profil, das bei einer Vorwärtsfahrt des Kraftwagens von Luft beziehungsweise Fahrtwind umströmt wird.

Derartige, in wenigstens einer Stellung umströmte Profile sind auch aus dem Serienfahrzeugbau bekannt, wobei das jeweilige Profil beispielsweise als Deckel eines Schiebe- und/oder Hebedaches ausgebildet ist. Ein solcher Deckel ist beispielsweise in Fahrzeughochrichtung verlagerbar und weist ebenfalls eine Vorderkante auf, welche in wenigstens einer Stellung des Deckels und bei einer Vorwärtsfahrt des Kraftwagens von Luft beziehungsweise Fahrtwind angeströmt und umströmt wird. Es hat sich gezeigt, dass es an umströmten Profilen beziehungsweise Deckeln an der Vorderkante zu so genanntem Vorderkantenlärm mit Heul- und/oder Pfeiftönen kommen kann.

Aufgabe der vorliegenden Erfindung ist es daher, eine Windleiteinrichtung der eingangs genannten Art derart weiterzuentwickeln, dass ein besonders vorteilhaftes Geräuschverhalten realisiert werden kann.

Diese Aufgabe wird erfindungsgemäß durch eine Windleiteinrichtung mit den Merkmalen des Anspruches 1 gelöst. Vorteilhafte Ausgestaltungen mit zweckmäßigen Weiterbildungen der Erfindung sind in den übrigen Ansprüchen angegeben.

Um eine Windleiteinrichtung der eingangs genannten Art derart weiterzuentwickeln, dass ein besonders vorteilhaftes Geräuschverhalten realisiert werden kann, ist es erfindungsgemäß vorgesehen, dass in wenigstens einem sich in Fahrzeuglängsrichtung nach hinten an die Vorderkante anschließenden Randbereich des Profils eine vorzugsweise raue Stoffoberfläche angeordnet ist. Durch die raue Stoffoberfläche wird der Strömungswiderstand des Profils erhöht, ohne dass sich Druckkräfte auf der Oberfläche absetzen können, da beispielsweise ein die Stoffoberfläche bildender Stoff ausweichen kann. Es hat sich gezeigt, dass sich durch eine solche Stoffoberfläche und ihre Anordnung in dem sich an die Vorderkante anschließenden Randbereich Windgeräusche, insbesondere Heul- und/oder Pfeiftöne, vermeiden oder zumindest gering halten lassen, so dass ein besonders vorteilhaftes Geräuschverhalten der Windleiteinrichtung erreicht werden kann.

Bei dem Profil handelt es sich beispielsweise um eine eigensteife Lamelle, welche sich beispielsweise zumindest in der wenigstens einen Stellung zumindest im Wesentlichen in Fahrzeugquerrichtung und somit quer zur Strömungsrichtung der Luft erstreckt. Ferner ist es denkbar, dass das Profil als ein Deckel eines Schiebe- und/oder Hebedaches ausgebildet ist, wobei der Deckel beispielsweise in Fahrzeughochrichtung verlagerbar ist. Ferner ist es möglich, dass das Profil ein Spoiler ist, welcher beispielsweise zwischen der wenigstens einen Stellung und wenigstens einer eingefahrenen Stellung verstellbar ist. Des Weiteren ist es möglich, dass das Profil als ein Windabweiser beziehungsweise Windabweiserflügel ausgebildet ist, mittels welchem die Luft geführt beziehungsweise abgelenkt werden kann.

Der Erfindung liegt die Erkenntnis zu Grunde, dass es bei herkömmlichen umströmten Profilen an der Vorderkante zu Vorderkantenlärm mit Heul- und/oder Pfeiftönen kommen kann. Ursache hierfür sind zeitlich fluktuierende Druckunterschiede auf der Ober- und Unterseite des Profils, insbesondere dessen Profilspitze, wodurch Ausgleichsströmungen entstehen, die wiederum die Drücke beeinflussen. Bei der erfindungsgemäßen Windleiteinrichtung können durch den Einsatz der Stoffoberfläche die Ausgleichsströmungen und somit die mit Heul- und/oder Pfeiftönen reduziert werden, so dass übermäßiger Vorderkantenlärm vermieden werden kann.

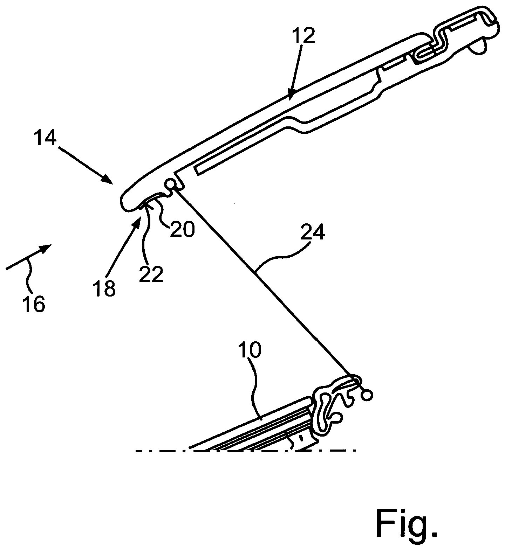

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige Figur zeigt in einer schematischen Längsschnittansicht eine Windleiteinrichtung für einen Kraftwagen, insbesondere einen Personenkraftwagen. Der Personenkraftwagen ist beispielsweise als offener Personenkraftwagen ausgebildet und weist dabei ein Verdeck auf, welches relativ zur Karosserie des Personenkraftwagens zwischen einer Schließstellung und wenigstens einer Offenstellung verlagerbar ist. Dabei ist die Windleiteinrichtung beispielsweise an einem Windschutzscheibenrahmen des Personenkraftwagens gehalten. Durch den Windschutzscheibenrahmen ist eine Scheibenöffnung begrenzt, in welcher eine in der Figur ausschnittsweise erkennbare Windschutzscheibe 10 des Personenkraftwagens angeordnet ist. Dabei ist die Windschutzscheibe 10 an dem Windschutzscheibenrahmen gehalten.

Ferner ist es denkbar, dass die Windleiteinrichtung in einem in Fahrzeuglängsrichtung vorderen Randbereich einer als Durchgangsöffnung ausgebildeten Dachöffnung eines Daches der Karosserie des Personenkraftwagens angeordnet ist. Die Windleiteinrichtung umfasst dabei wenigstens ein eigensteifes Profil 12, welches vorliegend zwischen wenigstens einer in der Figur gezeigten Windleitstellung und wenigstens einer eingefahrenen Stellung verstellbar ist. Insbesondere ist das Profil 12 gegenüber dem Windschutzscheibenrahmen zwischen der Windleitstellung und der eingefahrenen Stellung verstellbar. In der Windleitstellung ist das Profil 12 gegenüber der eingefahrenen Stellung in Fahrzeughochrichtung (z-Richtung) weiter oben angeordnet. Das Profil 12 ist vorliegend als eigensteife Lamelle ausgebildet, deren Längserstreckungsrichtung zumindest im Wesentlichen in Fahrzeugquerrichtung (y-Richtung) verläuft. Das Profil 12 könnte jedoch auch als Windabweiserflügel, Spoiler oder Deckel eines Schiebe- und/oder Hebedaches ausgebildet sein.

Befindet sich das Profil 12 in der Windleitstellung, so wird das Profil 12 bei einer Vorwärtsfahrt des Kraftwagens vom Fahrtwind angeströmt und umströmt. Dies bedeutet, dass das Profil 12 zumindest in der Windleitstellung im Wind steht. Dabei weist das beispielsweise aus einem Kunststoffmaterial gebildete Profil 12 eine Vorderkante 14 auf, welche in Fahrzeuglängsrichtung nach vorne weist. In der Windleitstellung und bei einer Vorwärtsfahrt des Kraftwagens strömt die das Profil 12 umströmende Luft das Profil 12 über die Vorderkante 14 an. In der Figur ist diese Anströmung durch einen Pfeil 16 veranschaulicht.

Um nun ein besonders vorteilhaftes Geräuschverhalten der Windleiteinrichtung zu realisieren, ist in wenigstens einem, sich in Fahrzeuglängsrichtung (x-Richtung) hinten an die Vorderkante 14 anschließenden Randbereich 18 des Profils 12 eine raue Stoffoberfläche 20 vorgesehen, welche beispielsweise durch eine Beflockung, das heißt als Flock ausgebildet ist. Alternativ ist es denkbar, dass die Stoffoberfläche 20 durch ein Stoffband, insbesondere ein Faserstoffband, gebildet ist. Mit anderen Worten ist die raue Stoffoberfläche 20 durch einen Stoff gebildet, welcher beispielsweise an dem Profil 12 angeordnet, insbesondere befestigt, ist. Aus der Figur geht hervor, dass die Stoffoberfläche 20 vorliegend auf einer in Fahrzeughochrichtung nach unten weisenden Unterseite 22 des Profils 12 angeordnet ist.

Bei dem in der Figur dargestellten Ausführungsbeispiel ist die Vorderkante 14 abgerundet, weist also -senkrecht zur Luftströmung 16 betrachtet- einen gekrümmten Verlauf auf. An die Vorderkante 14 schließt sich übergangslos die die Stoffoberfläche 20 aufweisende Unterseite 22 des Profils 12 an. Dabei ist dieser, die Stoffoberfläche 20 aufweisende Wandbereich gekrümmt ausgebildet und zwar -ausgehend von der Windschutzscheibenoberseite- hier konkav gekrümmt.

Das Profil 12 ist zumindest in der Windleitstellung und bei einer Vorwärtsfahrt des Personenkraftwagens ein von Luft umströmtes Profil, bei dem es - falls keine entsprechenden Gegenmaßnahmen getroffen sind - an der Vorderkante 14 zu Heul- und/oder Pfeiftönen kommen kann. Eine Gegenmaßnahme gegen die Entstehung von Heul- und/oder Pfeiftönen ist die Stoffoberfläche 20, mittels welcher die Entstehung von unerwünschten Windgeräuschen vermieden oder zumindest gering gehalten werden kann.

Die Windleiteinrichtung umfasst ferner ein mit dem Profil 12 verbundenes, flexibles und luftdurchlässiges Flächenelement 24, welche beispielsweise als ein Netz ausgebildet ist. Das Flächenelement 24 ist einerseits mit dem Profil 12 und andererseits zumindest mittelbar beispielsweise mit dem Windschutzscheibenrahmen verbunden, wobei das Flächenelement 24 mit dem Profil 12 mitverstellbar ist. Somit ist das Flächenelement 24 - wie aus der Figur erkennbar ist - in der Windleitstellung zwischen dem Profil 12 und dem Windschutzscheibenrahmen aufgespannt. Mittels des Flächenelements 24 können beispielsweise unangenehme Geräusche, insbesondere Wummergeräusche, und/oder unerwünschte Luftströmungen in die Fahrgastzelle des Personenkraftwagens vermieden oder zumindest gering gehalten werden, insbesondere dann, wenn das Verdeck beziehungsweise das Schiebe- und/oder Hebedach geöffnet ist.

Wie in der Figur ersichtlich, ist der mit der Stoffoberfläche 20 versehene, konkav gekrümmte Wandbereich der Profilunterseite 22 so gegenüber dem aufgespannten Flächenelement 24 angeordnet, dass die die Vorderkante 14 anströmende Luft mittels dieses Wandbereichs der Profilunterseite 22 in Richtung auf das Flächenelement umgelenkt beziehungsweise geleitet wird, so dass der nahe an der beziehungsweise über die Profilunterseite 22 strömende Luftströmung unmittelbar auf das Flächenelement 24 trifft und nicht gegen die in quasi Verlängerung der Stoffoberfläche vorgesehene Befestigungsstelle des Flächenelements 24 an dem Profil 12 prallt, was zu nicht gewünschten Störungen der Luftströmung führen könnte.

## Patentansprüche

1. Windleiteinrichtung eines öffnungsfähigen Dachs eines Kraftwagens, mit wenigstens einem in wenigstens einer Stellung und bei einer Vorwärtsfahrt des Kraftwagens von Luft umströmten, eigensteifen Profil (12), welches zumindest eine Vorderkante (14) aufweist, über welche die Luft das Profil anströmt,
**dadurch gekennzeichnet, dass**
in wenigstens einem sich in Fahrzeuglängsrichtung nach hinten an die Vorderkante (14) anschließenden Randbereich (18) des Profils (12) eine Stoffoberfläche (20) angeordnet ist.

2. Windleiteinrichtung nach Anspruch 1,
**dadurch gekennzeichnet, dass**
die Stoffoberfläche (20) auf einer in Fahrzeughochrichtung nach unten weisenden Unterseite (22) des Profils (12) angeordnet ist.

3. Windleiteinrichtung nach Anspruch 1 oder 2,
**dadurch gekennzeichnet, dass**
die Stoffoberfläche (20) durch eine Beflockung gebildet ist.

4. Windleiteinrichtung nach einem der vorhergehenden Ansprüche,
**dadurch gekennzeichnet, dass**
die Stoffoberfläche (20) durch ein Stoffband, insbesondere ein Faserstoffband, gebildet ist.

5. Windleiteinrichtung nach einem der vorhergehenden Ansprüche,
**dadurch gekennzeichnet, dass**
das Profil (12) zwischen wenigstens einer eingefahrenen Stellung und der wenigstens einen Stellung als Windleitstellung verstellbar ist, in welcher das Profil (12) gegenüber der eingefahrenen Stellung in Fahrzeughochrichtung weiter oben angeordnet ist.

6. Windleiteinrichtung nach Anspruch 5,
**dadurch gekennzeichnet, dass**
ein mit dem Profil (12) verbundenes, flexibles Flächenelement (24) vorgesehen ist, welches mit dem Profil (12) mitverstellbar ist.

## Claims

1. Air deflection device of an opening roof of a motor vehicle, comprising at least one intrinsically rigid profile (12), over which air flows in at least one position at a forward travel of the motor vehicle and which has at least one front edge (14), via which the air flows to the profile,
**characterised in that**
a fabric surface (20) is located in at least one edge region (18) of the profile (12) adjoining the front edge (14) towards the rear.

2. Air deflection device according to claim 1,
**characterised in that**
the fabric surface (20) is located on an underside (22) of the profile (12) pointing downwards in the vertical direction of the vehicle.

3. Air deflection device according to claim 1 or 2,
**characterised in that**
the fabric surface (20) is produced by flocking.

4. Air deflection device according to any of the preceding claims,
**characterised in that**
the fabric surface (20) is represented by a fabric ribbon, in particular a non-woven fabric ribbon.

5. Air deflection device according to any of the preceding claims,
**characterised in that**
the profile (12) is adjustable between a retracted position and the at least one position representing the air deflection position, in which the profile (12) is at a higher level than in the retracted position in the vertical direction of the vehicle.

6. Air deflection device according to claim 5,
**characterised in that**
a flexible surface element (24) is provided, which is joined to the profile (12) and can be adjusted together with the profile (12).

## Revendications

1. Dispositif déflecteur d'air d'un toit ouvrant d'une automobile, avec au moins un profilé intrinsèquement rigide (12) parcouru par de l'air dans au moins une position et dans le cas d'une marche avant de l'automobile qui présente au moins une arête avant (14) au-dessus de laquelle l'air souffle sur le profilé,
**caractérisé en ce que**
une surface de matière (20) est disposée dans au moins une région de bord (18) du profilé (12) se rattachant vers l'arrière à l'arête avant (14) dans la direction longitudinale de véhicule.

2. Dispositif déflecteur d'air selon la revendication 1,
**caractérisé en ce que**
la surface de matière (20) est disposée sur un côté inférieur (22) du profilé (12) tourné vers le bas dans la direction de hauteur de véhicule.

3. Dispositif déflecteur d'air selon la revendication 1 ou 2,
**caractérisé en ce que**
la surface de matière (20) est formée par un flocage.

4. Dispositif déflecteur d'air selon une des revendications précédentes,
**caractérisé en ce que**
la surface de matière (20) est formée par un ruban de matière, notamment un ruban de matière fibreuse.

5. Dispositif déflecteur d'air selon une des revendications précédentes,
**caractérisé en ce que**
le profilé (12) peut être déplacé entre au moins une position escamotée et l'au moins une position en tant que position déflectrice d'air dans laquelle le profilé (12) est disposé davantage en haut dans la direction de hauteur de véhicule par rapport à la position escamotée.

6. Dispositif déflecteur d'air selon la revendication 5,
**caractérisé en ce que**
un élément de surface flexible (24) connecté au profilé (12) qui peut être déplacé avec le profilé (12) est prévu.
